Europäisches Patentamt

European Patent Office

Office européen des brevets

(11) Publication number: **0 320 119 B1**

# EUROPEAN PATENT SPECIFICATION

(45) Date of publication of patent specification: **29.09.93**  (51) Int. Cl.5: **C08L 23/20**, C08L 23/18, C08L 23/02

(21) Application number: **88310501.7**

(22) Date of filing: **08.11.88**

(54) **Poly-1-butene resin composition and water-proof sheet produced from the composition.**

(30) Priority: **09.11.87 JP 282793/87**
**09.11.87 JP 282794/87**

(43) Date of publication of application:
**14.06.89 Bulletin 89/24**

(45) Publication of the grant of the patent:
**29.09.93 Bulletin 93/39**

(84) Designated Contracting States:
**AT BE DE FR GB IT NL SE**

(56) References cited:
**EP-A- 0 164 217**

(73) Proprietor: **MITSUI PETROCHEMICAL INDUS-TRIES, LTD.**
**2-5, Kasumigaseki 3-chome Chiyoda-ku Tokyo 100(JP)**

Proprietor: **SHELL OIL COMPANY**
**900, Louisiana**
**Houston Texas 77001(US)**

(72) Inventor: **Tanaka, Haruhiko**
**1-3-4, Misono**
**Ohtake-shi Hiroshima-ken(JP)**
Inventor: **Kagawa, Fukashi**
**3261-14, Kuga-cho**
**Kuga-gun Yamaguchi-ken(JP)**
Inventor: **Nakashima, Kouji**
**8774-188, Ohno-cho**
**Saeki-gun Hiroshima-ken(JP)**

(74) Representative: **Myerscough, Philip Boyd et al**
**J.A.Kemp & Co. 14, South Square Gray's Inn London, WC1R 5EU (GB)**

**Description**

This invention relates to a poly-1-butene resin composition. More specifically, it relates to a poly-1-butene resin composition which has superior water-proofness, heat resistance, suppleness and high-temperature chlorine-containing water resistance and is suitable for producing a thermofusible heat-resistant waterproof sheet, and to a waterproof sheet produced from the composition.

The widespread installation in recent years of air conditioning devices and facilities has led to the need for enormous amounts of energy. Since the power consumption for air-conditioning reaches a maximum particularly in the daytime during summer, the supply of power in large urbane areas tends to become scarce. In order to improve this situation, electric power companies set up a system of inexpensive night power whereby they intend to equalize power consumptions in the daytime and at night.

With this background, the development of a heat accumulation system has recently been under way in order to utilize inexpensive night power and accumulate energy, and many buildings, hotels, and apartment buildings have begun to install heat acummulator tanks usually in their basements.

Such heat accumulator tanks require thermal insulation and water proofness. Usually, a plastic foam such as a polystyrene foam and a polyurethane foam is laid as a thermally insulating material on surfaces of concrete floors, walls and ceilings. The insulating material is waterproof-finished, and hot water is pooled directly in a space lined with the insulating material.

Mortar water-proofing, coated film water-proofing, asphalt water-proofing and sheet water-proofing, for example, can be used to water-proof the thermally insulating material. In view of workability and long-term durability, the sheet water-proofing is an excellent method. This method is carried out by laying a waterproof sheet of a resin or rubber having good water-proofness on the thermally insulating material and fixing it there.

In order to use this sheet water-proofing method for water-proofing heat-accumulators, it is necessary to use a waterproof sheet having the following properties.

1) Water-proofness

2) Heat resistance: Usually it is required to have a heat resistance to temperatures of 50 to 60 °C, and sometimes, higher temperatures.

3) Workability (applicability): In many cases, the heat accumulators are set up in a dark and poorly-ventilated place on a basement slab. In order to apply the waterpoof sheet to such a place safely and accurately, it should have moderate suppleness and thermofusibility. It is preferable on the other hand to avoid the use of a waterproof sheet which has to be applied by using a solvent-base adhesive because it gives rise to safety and hygienic problems.

4) Resistance to chlorine-containing water:

City water usually contains chlorine for sterilization. The action of chlorine will chemically degrade the resin or rubber constituting the waterproof sheet to deteriorate the properties, especially water-proofness, of the waterproof sheet. Since the action of chlorine becomes particularly strong at high temperatures, it is desirable to select a waterproof sheet having excellent resistance to chlorine-containing water.

Heretofore, sheets of polyethylene or thermoplastic elastomers (TPE for short) have been used as waterproof sheets for civil engineering, for example in water reservoir ponds and agricultural and industrial water channels. These sheets, however, cannot be used for hot water because of their inferior long-term durability.

Waterproof sheets of polypropylene, nylon or polyesters are known to have superior heat resistance. But they are water-absorbing and lack good water-proofness, or have inferior workability or applicability because of their low supplness. Furthermore, because in many cases, a solvent-base adhesive is required to bond these sheets, they are undesirable in regard to safety and hygiene in applying them in a poorly-ventilated basement or the like.

JP-A-84,839/1983 proposes a poly-1-butene resin composition having excellent resistance to chlorine-containing water comprising poly-1-butene and a minor proportion of a specific phenolic antioxidant.

Poly-1-butene resin is used worldwide as water supply pipes mainly because the poly-1-butene resin has excellent compression strength, heat resistance, high-temperature creep resistance and stress cracking resistance and the pipes made of it can be joined by heat fusion.

The poly-1-butene composition described in JP-A-84,839/1983 has improved resistance to chlorine-containing water while retaining the above excellent properties of poly-1-butene.

Japanese Patent Publication No. 9325/1986 discloses a pipe produced from poly-1-butene resin having high rigidity. Because of its high rigidity, this poly-1-butene resin has inferior suppleness and reduced workability, and cannot be used to make a waterproof sheet.

In EP-A-164217 we describe a thermoplastic elastomer which is a partially crosslinked product of a blend of a peroxide-crosslinkable olefinic copolymer rubber, a peroxide-crosslinkable polyolefin resin, a peroxide decomposable (rather than crosslinkable) polyolefin resin and optionally a softening agent of the mineral oil type.

This invention seeks to provide a resin composition based on a butene-1 polymer resin of particular utility in providing waterproof sheets having excellent waterproofness, heat resistance, suppleness and high-temperature chlorine resistance, and which can be thermofused.

According to this invention, there is provide a poly-1-butene resin composition comprising (A) 50 to 95 % by weight of poly-1-butene resin, and (B) 50 to 5 % by weight of a partially crosslinked olefinic thermoplastic elastomer obtained by dynamically heat-treating a mixture of (a) a peroxide-crosslinkable olefinic copolymer rubber, (b) a peroxide-decomposable olefinic resin and (c) a peroxide-noncrosslinkable hydrocarbon-type rubber substance and/or a mineral oil-type softening agent in the presence of an organic peroxide, said elastomer having a tensile modulus of not more than 1000 kg/cm$^2$, the amounts of components (A) and (B) being based on their combined weight.

The poly-l-butene resin (A) may be, for example, a homopolymer of 1-butene or a copolymer of at least 80 mole % of 1-butene and not more than 20 mole % of another alpha-olefin having 2 to 20 carbon atoms, such as ethylene, propylene, 4-methyl-1-pentene, 1-hexene, 1-octene, 1-decene, 1-tetradecene or 1-octadecene.

Preferably, the copolymer is derived from at least 90 mole % of 1-butene and up to 10 mole % of the other alpha-olefin.

The poly-1-butene resin (A) used in this invention is a crystalline polymer usually having a melt flow rate [MFR (E) measured by ASTM D 1238, E] of 0.01 to 50 g/10 minutes, preferably 0.05 to 10 g/10 minutes. If its MFR (E) is less than 0.01 g/10 minutes, melt extrusion of the resulting composition tends to be difficult. If it exceeds 50 g/10 minutes, the melt viscosity of the resin composition is lowered and its moldability tends to be inferior.

The polymer (B) used in this invention has a tensile modulus, measured by the Tensile Test for Plastics set forth in JIS K 7113 on a No. 2 test specimen described in it, of not more than 1,000 kg/cm$^2$ , preferably not more than 500 kg/cm$^2$.

Preferably, the flexible polymer (B) is lowly crystalline, or amorphous.

Advantageously, in the elastomer (B) the mixture of components (a), (b) and (c) contains 40 to 90 % by weight of component (a) and 60 to 10 % by weight of components (b) based on the total amount of components (a) and (b), and 5 to 100 parts by weight, preferably 10 to 80 parts by weight, above all 20 to 70 parts by weight of component (c) per 100 parts by weight of components (a) and (b) combined.

If the amount of component (b) exceeds the above-specified limit, the suppleness and rebound of the olefinic thermoplastic elastomer (B) are reduced undesirably. On the other hand, if it is less than the lower limit, the heat resistance and flowability of the resulting olefinic thermoplastic elastomer (B) are undesirably reduced.

If the amount of component (c) is below the lower limit specified, the flowability improving effect of the resulting olefinic thermoplastic elastomer (B) is low. If it exceeds the upper limit, the resulting olefinic thermoplastic elastomer (B) undesirably has lowered heat resistance and tensile properties.

More preferably, the elastomer (B) comprises 50 to 80 % by weight of component (a) and 50 to 20 % by weight of component (b) based on the total amount of components (a) and (b) and 5 to 30 parts by weight of the rubbery substance (c) and 5 to 60 % parts by weight, preferably 10 to 40 % parts by weight, of the mineral oil-type softening agent, per 100 parts by weight of components (a) and (b) combined.

If the amount of the hydrocarbon-type rubbery substance (c) exceeds the upper limit (30 parts by weight), the heat resistance and tensile properties of the resulting olefinic thermoplastic elastomer (B) are undesirably degraded.

If the mineral oil-type softening agent, the other component (c), exceeds the above limit, the heat resistance of the resulting olefinic thermoplastic elastomer (B) is reduced, or the softening agent oozes out to impair the appearance of the resin.

The peroxide-crosslinkable olefinic copolymer rubber (a) is an olefinic copolymer rubber which does not undergo crosslinking and thus does not decrease in flowability even when kneaded with the peroxide under heat. It is preferably an amorphous random elastomeric copolymer comprising an olefin as a main component. Examples are an ethylene/propylene copolymer rubber, an ethylene/propylene/non-conjugated diene copolymer rubber and an ethylene/butadiene copolymer rubber. These copolymers may be used singly or in combination. Of these, the ethylene/propylene copolymer rubber and ethylene/propylene/nonconjugated diene rubbers (the non-conjugated diene is preferably dicyclopentadiene, 1,4-hexadiene, cyclooctadiene, methylenenorbornene and ethylidene-norbornene) are preferred. The ethylene/propylene/non-conjugated diene copolymer rubbers, above all an ethylene/propylene/ethylidenenorbornene copolyme rubber, are especially preferred. These copolymers give an olefinic thermoplastic elastomer (B) having excellent heat resistance, tensile properties and rebound. The copolymer rubbers have a Mooney viscosity, $ML_{1+4}(100\ °C)$, of 10 to 250, especially 70 to 200. If the Mooney viscosity of the resulting olefinic thermoplastic elastomer (B) is less than 10, the tensile properties of the resulting olefinic thermoplastic elastomer (B) has low tensile properties. If it exceeds 250, the flowability of the elastomer (B) is undesirably low. The rubber (a) preferably has an iodine value (the degree of unsaturation) of not more than 16. At an iodine value within this range, there can be obtained an olefinic thermoplastic elastomer (B) which is partially crosslinked and has a well-balanced combination of rubbery properties and flowability.

The peroxide-decomposable olefinic resin (b) is an olefinic resin which when kneaded under heat with the peroxide, is decomposed to decrease in molecular weight and increase in flowability. Examples include isotactic polypropylene, a propylene/ethylene copolymer resin, a propylene/1-butene copolymer resin, a propylene/1-hexene copolymer resin, and a propylene/4-methyl-1-pentene copolymer resin. They may be used either singly or in combination.

The peroxide-decomposable olefinic resin (b) has a melt flow rate ($MFR_2$) of 0.1 to 50 g/10 minutes, preferably 5 to 20 g/10 minutes. The olefinic resin component (b) serves to enhance the flowability and heat resistance of the olefinic thermoplastic elastomer (B).

The peroxide-noncrosslinkable hydrocarbon-type rubbery substance (c) is a hydrocarbon-type rubbery substance which does not undergo crosslinking and thus does not decrease in flowability even when kneaded with the peroxide under heat. Examples are polyisobutylene, butyl rubber, a copolymer rubber of at least 70 mole % of propylene and up to 30 mole % of ethylene, and a propylene/1-butene copolymer. They may be used singly or in combination. Polyisobutylene is preferred in view of its performance and handling. Above all, polyisobutylene having a Mooney viscosity of not more thann 60 is advantageous because it improves the flowability of the resulting olefinic thermoplastic elastomer (B).

In the present invention, crosslinking denotes a phenomenon in which the apparent molecular weight of the polymer inceases as a result of the predominant occurrence of crosslinking reaction in competitive reactions of decomposition and crosslinking of the polymer. Decomposition denotes a phenomenon in which the apparent molecular weight of the polymer decreases as a result of the predominant occurrence of decomposition reaction in the above competitive reactions

The mineral oil-type softening agent (c) is preferably a high-boiling paraffinic, naphthenic or aromatic petroleum fraction, particularly a high-boiling fraction having a boiling point of at least 250°C under atmospheric pressure. The petroleum fraction is usually used in roll processing of rubber to weaken the intramolecular force of the rubber and make the processing easy, aid in the dispersion of carbon black, white carbon, etc. or to reduce the hardness of the vulcanized rubber and increase the suppleness and elasticity.

The partially crosslinked olefinic thermoplastic elastomer (B) used in this invention can be produced by dynamically heat-treating the mixture composed of components (a) and (c), preferably the mixture composed of components (a), (b) and (c), in the presence of an organic peroxide.

Examples of the organic peroxide include dicumyl peroxide, di-tert-butyl peroxide, 2,5-dimethyl-2,5-di-(tert-butylperoxy)hexane, 2,5-dimethyl-2,5-di-tert-butylperoxy)-hexyne-3, 1,3-bis(tert-butylperoxyisopropyl)-benzene, 1,1-bis(tert-butylperoxy)-3,3,5-trimethylcyclohexane, n-butyl-4,4-bis)tert-butylperoxy)-valerate, benzoyl peroxide, p-chlorobenzoyl peroxide, 2,4-dichlorobenzoyl peroxide, tert-butyl peroxybenzoate, tert-butyl peroxyisopropylcarbonate, diacetyl peroxide, lauroyl peroxide, and tert-butylcumyl peroxide. Of these, 2,5-dimethyl-2,5-di(tert-butylperoxy)hexane, 2,5-dimethyl-2,5-di(tert-butylperoxy)hexyne-3, 1,3-bis(tert-butylperoxyisopropyl)benzene, 1,1-bis(tert-butylperoxy)-3,3,5-trimethylcyclohexane and n-butyl-4,4-bis(tert-butylperoxy)valerate are preferred in view of odor and scorch stability. The 1,3-bis(tert-butylperoxyisopropyl)-benzene is especially preferred.

The amount of the organic peroxide used is preferably 0.05 to 1.0 % by weight, especially 0.1 to 0.5 % by weight, based on the entire mixture to be treated. If it is below 0.05 % by weight, the crosslinking degree of the crosslinkable rubber (a) is too low, and the rubbery properties, such as heat resistance, tensile properties, elasticity recovery and rebound, of the resulting olefinic thermoplastic elastomer (B) are not sufficient. If, on the other hand, it exceeds 1.0 % by weight, the crosslinking degree of the peroxide-crosslinkable rubber (a) increases and the flowability of the composition as a whole is undesirably reduced.

In the heat-treatment, a peroxy vulcanization aid such as sulfur, p-quinone dioxime, p,p'-dibenzoylquinone dioxime, N-methyl-N,4-nitrosoaniline, nitrobenzene, diphenylguanidine and trimethylolpropane-N,N'-m-phenylenedimaleimide, a polyfunctional methacrylate monomer such as ethylene glycol dimethacrylate, diethylene glycol dimethacrylate, polyethylene glycol dimethacrylate, trimethylolpropane trimethacrylate or allyl methacrylate, or a polyfunctional vinyl monomer such as divinylbenzene, triallyl cyanurate, a vinyl butyrate or vinyl stearate may be incorporated in the mixture to be heat-treated. As a result of incorporating these compounds, a uniform and mild crosslinking reaction can be expected to take place. In particular, the use of divinylbenzene is most preferred because it is easy to handle, has good compatibility with the peroxide-crosslinkable olefinic copolymer rubber (a) and the peroxide-decomposable olefinic resin (b), the main components of the mixture to be treated, acts as a dispersing aid for the organic peroxide because of its action of solubilizing the peroxide, and thus the crosslinking effect by heat-treatment is uniform. Consequently, divinylbenzene contributes to the production of an olefinic thermoplastic elastomer (B) having a well-balanced combination of flowability and other properties.

The preferred amount of the crosslinking aid or the polyfunctional monomer in the production of the olefinic thermoplastic elastomer (B) is 0.1 to 2 % by weight, especially 0.3 to 1 % by weight, based on the total amount of the mixture to be treated. If it exceeds 2 % by weight, the crosslinking reaction proceeds too far when the amount of the organic peroxide used is large. As a result, the flowability of the resulting olefinic thermoplastic elastomer (B) is inferior. If, on the other hand, the amount of the organic peroxide is small in this case, the polyfunctional monomer remains unreacted in the olefinic thermoplastic elastomer (B), and a heat history during processing and molding of the elastomer (B) may undesirably cause changes in its properties.

To promote decomposition of the organic peroxide in the production of the olefinic thermoplastic elastomer (B), it is possible to use a tertiary amine such as triethylamine, tributylamine or 2,4,6-tris-(dimethylamino)phenol, or an organic metal carboxylic acid salt such as a naphthenate or octanoate of a metal (e.g., aluminum, cobalt, vanadium, copper, calcium, zirconium, manganese, magnesium, lead or mercury).

Processes for producing such olefinic thermoplastic elastomers (B) are described in Japanese Patent Publications Nos. 15741/1981 and 23702/1979.

The heat-treatment is carried out at a temperature of usually 160 to 280 °C, preferably 180 to 220 °C.

The poly-1-butene resin composition provided by this invention comprises 50 to 95 % by weight of the poly-1-butene resin (A) and 500 to 5 % by weight of the flexible polymer (B) [including the olefinic thermoplastic elastomer (B')]. Preferably, it comprises 60 to 90 % by weight of (A) and 40 to 10 % by weight of (B), and more preferably 65 to 85 % by weight of (A) and 35 to 15 % by weight of (B).

To improve the long-term durability of heat aging resistance and chlorine-containing water resistance, it is desirable to incorporate at least one of phenolic and phosphorus-containing antioxidants described below. The total amount of the antioxidants is 0.1 to 2.0 parts by weight, preferably 0.5 to 1.9 parts by weight, per 100 parts by weight of resins (A) and (B) combined.

Examples of the antioxidants are

(1) 2,6-di-tert-butyl-4-hydroxybenzoate (Tinuvin 120)

(2) n-hexadecyl-3,5-di-tert-butyl-4-hydroxybenzoate (Cyasorb UV-2908)

(3) 1,3,5-trimethyl-2,4,6-tris(3,5-di-tertbutyl-4-hydroxybenzyl)benzene (Irganox 1330)

(4) 1,3,5-tris(4-tert-butyl-3-hydroxy-2,6-dimethylphenyl)isocyanate(Syanox 1790)

(5) tris(3,5-di-tert-butyl-4-hydroxyphenyl)isocyanate (Goodrite 3114)

(6) n-octadecyl-3-(3,5-di-tert-butyl-4-hydroxyphenyl)propionate (Irganox 1076)

(7) monoethyl bis(3,5-di-tert-butyl-4-hydroxybenzoylphosphonate), nickel salt (Irgastab 2002)

(8) 2,2'-dihydroxy-3,3'-di(alpha-methylcyclohexyl)-5,5'-dimethyl-diphenylmethane (Nonox WSP)

(9) 4,4-thiobis(3-methyl-6-tert-butylphenol) (Antage RC)

(10) 1,1,3-tris(2-methyl-4-hydroxy-5-tert-butyl-phenyl)butane (Topanol CA)

(11) tetrakis[methylene-3(3,5-di-tert-butyl-4-hydroxyphenyl)propionate)methane (Irganox 1010)

(12) 2,6-di-tert-butyl-p-cresol (BHT)

(13) 4,4'-methylenebis(2,6-di-tert-butyl-phenol (Ionox 220)

(14) tris(2,4-di-tert-butyl-phenyl)phosphite (Irgaphos 168)

(15) vitamin E

The poly-1-butene resin composition provided by this invention may further contain other additives such as ultraviolet absorbers, antimold agents, rust inhibitors, lubricants, fillers, pigments and heat stabilizers in amounts which do not impair the objects of this invention in addition to the antioxidants.

Furthermore, the poly-1-butene resin composition of the invention may contain another thermoplastic resin such as polyethylene, polypropylene or polystyrene in amounts which do not impair the objects of this invention for improvement of moldability and micro-adjustment of properties. The amount of such other thermoplastic resins is not more than 20 parts by weight per 100 parts by weight of the poly-1-butene resin (A) and the flexible polymer (B) combined.

A sheet formed from the poly-1-butene resin resin composition comprising the poly-1-butene resin (A) and the olefinic thermoplastic elastomer (B) has excellent heat resistance and water-proofness, and can be favorably used as a waterproof sheet.

The heat-resistant waterproof sheet can be produced, for example, by melt-kneading the poly-1-butene resin (A) and the flexible polymer (B) and as required, additives such as the antioxidant, forming the mixture into pellets, and molding the pellets into a sheet by an ordinary extrusion method or compression molding method. The sheet preferably has a thickness of 0.2 to 3 mm, and sheets having a thickness of 1 to 2 mm are frequently used.

The poly-1-butene resin composition of this invention can give a sheet which has excelent water-proofness, heat resistance, suppleness, stress cracking resistance and chlorine-containing water resistance and can be heat-fused. The sheet can be used as a liner material for heat accumulator tanks and hot water reservoir tanks. Since the poly-1-butene resin composition of the invention can be molded also by vacuum forming or pressure forming, containers of various shapes can be produced from the composition of this invention by such molding methods. The poly-1-butene resin composition of this invention can also be molded into hollow containers, pipes and tubes by pressure forming or pipe molding.

The following examples illustrate the preseent invention in more detail.

EXAMPLES 1-3

(1) Production of an olefinic thermoplastic elastomer

Seventy-five parts by weight of EPT (an ethylene/propylene/2-ethylidene-5-norbornene copolymer elastomer having an ethylene content of 78 mole %, an iodine number of 15 and a Mooney viscosity, $ML_{1+4}(100 \,°C)$, of 160), 25 parts by weight of PP (crystalline polypropylene having an $MFR_2$ of 11 g/10 minutes and a density of 0.91 g/cm$^2$), 25 parts of IIR (an isobutene-isoprene copolymer elastomer having a degree of unsaturation of 0.8 mole % and a Mooney viscosity, $ML_{1+4}$ (100 °C), of 45, 42 parts by weight of a paraffinic process oil, and as an antioxidant, 0.3 part of tetrakis[methylene(3,5-di-tert-butyl-4-hydroxyphenyl)propionate]methane were put in a Banbury mixer, and in a nitrogen atmosphere, kneaded at 180 °C for 15 minutes. The mixture was passed over a roll to form it into a sheet. The sheet was then cut to pellets by a sheet cutter.

A solution of 0.4 part of 1,3-bis(tert-butylperoxy-isopropyl)benzene in 0.4 part of divinylbenzene and 0.2 part of a process oil was added to the pellets and mixed by a Henschel mixer to adhere the solution uniformly to the surface of the pellets.

The pellets were then extruded into a nitrogen atmosphere at 210 °C with a residence time of 2 minutes to heat-treat the pellets dynamically and thus give an olefinic thermoplastic elastomer (TPE).

(2) Preparation of a poly-1-butene resin composition

A homopolymer of 1-butene (PB-1 for short; MFR 0.4 g/10 minutes when measured by ASTM D1238, E; melting point 125 °C) and the olefinic thermoplastic elastomer (TPE having a tensile modulus of less than 50 kg/cm$^2$) produced in (1) above were mixed in each of the proportions shown in Table 1 to give a resin mixture (PB-I+-TPE). To 100 parts by weight of PB-I+TPE were added 0.3 part by weight of each of Irganox 1330, Irganox 1010 and Tinuvin-120 as an antioxidant. They were mixed by a Henschel mixer, and melt-kneaded in an extruder with a cylinder diameter of 65 mm to give a poly-1-butene resin composition as pellets.

(3) Methods of evaluating the properties of the poly-1-butene resin composition

The poly-1-butene resin composition pellets were melted by a hot press at 200 °C for 10 minutes, and then pressed by a cold press at about 30 °C for 10 minutes. Thus, press sheets having a thickness of 1 mm and 3 mm were prepared. The heat resistance, suppleness, chlorine-containing water resistance and thermofusibility of the sheets were examined by the following methods.

1) Heat resistance

The heat resistance of the sample was measured in accordance with JIS K7206 (Method of Testing Vicat Softening Point of Thermoplastic Resins). The Vicat softening point is one measure of the maximum temperature at which the resin can be used. For use as a heat-resistant waterproof sheet, the resin

EP 0 320 119 B1

preferably has a Vicat softening point of more than 100 °C because it comes into contact with hot water.

2) Suppleness

The tensile modulus of the sample was measured in accordance with JIS K7113 (Method of Tensile Test on Plastics) as a measure of supplness. In many cases, waterproof sheets are normally used in a thickness of 1 to 2 mm from the standpoint of water-proofness and durability. Tensile moduli of more than 3,000 kg/cm$^2$ are undesirable because the sheet becomes hard and tends to have reduced workability.

3) Resistance to chlorine-containing water

A test sample, 10 mm x 150 mm in size, was cut out from the press sheet having a thickness of 1 mm, and secured by a holder. The sample was then immersed in a receptacle in which chlorine-containing water having an effective chlorine concentration of 100 ppm and kept at 90 °C was passed at a rate of 1 liter/hour. The time which elapsed until the surface of the sample became whitened was measured.

Whitening denotes a phenomenon in which the surface of the resin becomes apparently whitish as a result of degradation by the action of chlorine which is manifested by fine cracks occurring on the resin surface. This is a sign of the early stage of degradation.

4) Thermofusibility

Test samples, 15 mm x 70 mm, were cut out from a press sheet having a thickness of 1 mm. Two test samples were laid and held between seal bars heated at 240 °C under a pressure of 2 kg/cm$^2$ 1kg/cm$^2$ = 9,807.10$^4$ Pa for 4 seconds. The seal bars had a width of 1 cm. The peel strength of the bonded structure was then measured.

The results are shown in Table 1.

COMPARATIVE EXAMPLE 1

The procedure of Examples 1 to 3 was repeated except that PB-I used in Examples 1 to 3 was used singly instead of the poly-1-butene resin composition.

The results are shown in Table 1. Table 1 shows that the resulting sheet lacks suppleness and is unsuitable as a waterproof sheet.

COMPARATIVE EXAMPLE 2

The procedure of Examples 1 to 3 was repeated except that a butene/ethylene copolymer [PB-II; MFR = 0.2 (ASTM D1238, E)], butene content 90 mole %, melting point 100 °C] was used alone instead of the poly-1-butene resin composition.

The results are shown in Table 1. It is seen from Table 1 that the resulting sheet has improved suppleness but inferior heat resistance and chlorine-containing water resistance and is unsuitale as a waterproof sheet.

COMPARATIVE EXAMPLE 3

The procedure of Examples 1 to 3 was repeated except that high-pressure method low-density polyethylene [LDPE; MFR = 3.3 (ASTM D1238, E)], density 0.92 mole %, melting point 108 °C] was used alone instead of the poly-1-butene resin composition.

The results are shown in Table 1. It is seen from Table 1 that the resulting sheet had inferior heat resistance and chlorine-containing water resistnce and is unsuitable as a waterproof sheet.

COMPARATIVE EXAMPLE 4

The procedure of Examples 1 to 3 was repeated except that PB-I and TPE used in Examples 1 to 3 were used in the proportion shown in Examples 1 to 3.

The results are shown in Table 1. It is seen from Table 1 that the resulting sheet had poor heat resistance, chlorine-containing water resistance and thermofusibility.

7

Table 1

| | | Resin | | | | Properties of the sheet | | | |
|---|---|---|---|---|---|---|---|---|---|
| | | PB-I | PB-II | LDPE | TPE | Vicat softening point (°C) | Tensile modulus (kg/cm$^2$) | Resistance to chlorine-containing water [degradation time (weeks)] | Thermo-fusion strength (kg/15min) |
| Example | 1 | 85 | – | – | 15 | 110 | 2000 | 8 | 6.2 |
| | 2 | 70 | – | – | 30 | 106 | 1300 | 7 | 4.8 |
| | 3 | 60 | – | – | 40 | 102 | 700 | 5 | 4.3 |
| Comparative Example | 1 | 100 | – | – | – | 118 | 4600 | 10 | 10.2 |
| | 2 | – | 100 | – | – | 70 | 2000 | 1 | 7.1 |
| | 3 | – | – | 100 | – | 92 | 2200 | 2 | 8.2 |
| | 4 | 40 | – | – | 60 | 70 | 500 | 2 | 1.3 |

## Claims

1. A resin composition comprising (A) 50 to 95 % by weight of a 1-butene polymer resin, and (B) 50 to 5 % by weight of a partially crosslinked olefinic thermoplastic elastomer obtainable by dynamically heat-

8

treating a mixture of (a) a peroxide-crosslinkable olefinic polymer rubber, (b) a peroxide-decomposable olefinic resin and (c) a peroxide-noncrosslinkable hydrocarbon-type rubbery substance and/or a mineral oil-type softening agent in the presence of an organic peroxide, said elastomer having a tensile modulus of not more than 1000 kg/cm², the amounts of components (A) and (B) being based on their combined weight.

2. A composition according to claim 1 in which (A) is a homopolymer of 1-butene.

3. A composition according to claim 1 in which (A) is a copolymer of at least 80 mole % of 1-butene and up to 20% of another alpha-olefin having 2 to 20 carbon atoms.

4. A composition according to claim 1, 2 or 3 wherein in the elastomer (B) the mixture of components (a), (b) and (c) contains 40 to 90 % by weight of component (a) and 60 to 10 % by weight of component (b) based on the total amount of components (a) and (b), and 5 to 100 parts by weight of component (c) per 100 parts by weight of components (a) and (b) combined.

5. A composition according to any one of the preceding claims, wherein in the elastomer (B) component (a) is an olefinic copolymer rubber which when kneaded with the peroxide under heat, does not undergo crosslinking and thus does not decrease in flowability.

6. A composition according to any one of the preceding claims, wherein the elastomer (B) component (a) is at least one of an ethylene/propylene copolymer rubber, ethylene/propylene/non-conjugated diene copolymer rubbers and an ethylene/butadiene copolymer rubber.

7. A composition according to any one of the preceding claims, wherein the elastomer (B) component (b) is an olefinic resin which when kneaded with the peroxide under heat, decomposes with a reduction in molecular weight and an increase in flowability.

8. A composition according to any one of the preceding claims, wherein in the elastomer (B) component (b) is at least one of isotactic polypropylene, a propylene/ethylene copolymer resin, a propylene/1-butene copolymer resin, a propylene/1-hexene copolymer resin and a propylene/4-methyl-1-pentene copolymer resin.

9. A composition according to any one of the preceding claims, wherein in the elastomer (B) component (c) is a hydrocarbon-type rubbery substance which when kneaded with the peroxide under heat, does not undergo crosslinking and thus does not decrease in flowability.

10. A composition according to any one of the preceding claims, wherein in the elastomer (B) component (c) is at least one of polyisobutylene, butyl rubber, a copolymer rubber of at least 70 mole % of propylene and up to 30 mole % of ethylene, and a propylene/1-butene copolymer rubber.

11. A composition according to any one of the preceding claims, wherein in the elastomer (B) component (c) is a high-boiling paraffinic, naphthenic or aromatic petroleum fraction.

12. A waterproof sheet fabricated using a composition as claimed in any one of the preceding claims.

**Patentansprüche**

1. Harzmasse, umfassend (A) 50 bis 95 Gew.-% eines 1-Buten-Polymerharzes und (B) 50 bis 5 Gew.-% eines teilweise vernetzten olefinischen thermoplastischen Elastomers, erhältlich durch dynamische Wärmebehandlung eines Gemisches aus (a) einem mit Peroxid vernetzbaren olefinischen Polymerkautschuk, (b) einem mit Peroxid zersetzbaren olefinischen Harz und (c) einer mit Peroxid nicht vernetzbaren gummiartigen Substanz vom Kohlenwasserstoff-Typ und/oder einem Weichmacher vom Mineralöl-Typ in Gegenwart eines organischen Peroxids, wobei das Elastomer einen Zugfestigkeitsmodul von nicht mehr als 1000 kg/cm² besitzt, und die Mengen der Komponenten (A) und (B) jeweils auf das kombinierte Gewicht bezogen sind.

2. Masse nach Anspruch 1, wobei (A) ein 1-Buten-Homopolymer ist.

**3.** Masse nach Anspruch 1, wobei (A) ein Copolymer aus mindestens 80 mol-% 1-Buten und bis zu 20% eines anderen $\alpha$-Olefins mit 2 bis 20 Kohlenstoffatomen ist.

**4.** Masse nach Anspruch 1, 2 oder 3, wobei bei dem Elastomer (B) das Gemisch der Komponenten (a), (b) und (c) 40 bis 90 Gew.-% Komponente (a) und 60 bis 10 Gew.-% Komponente (b), bezogen auf die Gesamtmenge der Komponenten (a) und (b), und 5 bis 100 Gew.-Teile Komponente (c) auf 100 Gew.-Teile der Komponenten (a) und (b) zusammen enthält.

**5.** Masse nach einem der vorangehenden Ansprüche, wobei die Komponente (a) des Elastomers (B) ein olefinischer Copolymerkautschuk ist, der, wenn er mit dem Peroxid unter Hitze verknetet wird, nicht vernetzt wird und somit die Fließfähigkeit nicht abnimmt.

**6.** Masse nach einem der vorangehenden Ansprüche, wobei die Komponente (a) des Elastomers (B) mindestens ein Ethylen/Propylen-Copolymerkautschuk, Ethylen/Propylen/nicht-vernetzter Dien-Copolymerkautschuk und/oder ein Ethylen/Butadien-Copolymerkautschuk ist.

**7.** Masse nach einem der vorangehenden Ansprüche, wobei die Komponente (b) des Elastomers (B) ein olefinisches Harz ist, das, wenn es mit dem Peroxid unter Hitze verknetet wird, sich zersetzt unter Verringerung des Molekulargewichts und Zunahme der Fließfähigkeit.

**8.** Masse nach einem der vorangehenden Ansprüche, wobei die Komponente (b) des Elastomers (B) mindestens eine ist von isotaktischem Polypropylen, einem Propylen/Ethylen-Copolymerharz, einem Propylen/1-Buten-Copolymerharz, einem Propylen/1-Hexen-Copolymerharz und/oder einem Propylen/4-Methyl-1-penten-Copolymerharz.

**9.** Nasse nach einem der vorangehenden Ansprüche, wobei die Komponente (c) des Elastomers (B) eine gummiartige Substanz vom Kohlenwasserstoff-Typ ist, die, wenn sie mit dem Peroxid unter Hitze verknetet wird, nicht vernetzt wird und somit die Fließfähigkeit nicht abnimmt.

**10.** Masse nach einem der vorangehenden Ansprüche, wobei die Komponente (c) des Elastomers (B) mindestens eine ist, ausgewählt aus Polyisobutylen, Butylkautschuk, einem Copolymerkautschuk aus mindestens 70 mol-% Propylen und bis zu 30 mol-% Ethylen, und einem Propylen/1-Buten-Copolymerkautschuk.

**11.** Masse nach einem der vorangehenden Ansprüche, wobei die Komponente (c) des Elastomers (B) eine hochsiedende paraffinische, naphthenische oder aromatische Erdölfraktion ist.

**12.** Wasserfestfolie, hergestellt unter Verwendung einer Masse nach einem der vorangehenden Ansprüche.

**Revendications**

**1.** Composition de résine comprenant (A) 50 à 95 % en poids d'une résine polymère de 1-butène et (B) 50 à 5 % en poids d'un élastomère thermoplastique oléfinique partiellement réticulé, que l'on peut obtenir par traitement thermique dynamique d'un mélange de (a) un caoutchouc polymère olélinique réticulable à l'aide d'un peroxyde, (b) une résine oléfinique décomposable à l'aide d'un peroxyde, et (c) une substance caoutchouteuse de type hydrocarbure qui n'est pas réticulable à l'aide d'un peroxyde et/ou un agent de ramollissement de type huile minérale, en présence d'un peroxyde organique, ledit élastomère présentant un module en traction d'au plus 1000 kg/cm$^2$, et les proportions de (A) et (B) étant rapportées à leur poids total.

**2.** Composition conforme à la revendication 1, dans laquelle (A) est un homopolymère du 1-butène.

**3.** Composition conforme à la revendication 1, dans laquelle (A) est un copolymère d'au moins 80 % en moles de 1-butène et d'au plus 20 % d'une autre alpha-oléfine comportant de 2 à 20 atomes de carbone.

**4.** Composition conforme à la revendication 1, 2 ou 3, dans laquelle, dans l'élastomère (B), le mélange des composants (a), (b) et (c) contient 40 à 90 % en poids de composant (a) et 60 à 10 % en poids de composant (b), par rapport à la quantité totale des composants (a) et (b), et 5 à 100 parties en poids de composant (c) pour 100 parties en poids des composants (a) et (b) réunis.

5. Composition conforme à l'une quelconque des revendications précédentes, dans laquelle le composant (a) de l'élastomère (B) est un caoutchouc copolymère oléfinique qui, chauffé et malaxé avec un peroxyde, ne subit pas de réticulation et ne perd donc pas de sa fluidité.

6. Composition conforme à l'une quelconque des revendications précédentes, dans laquelle le composant (a) de l'élastomère (B) est constitué d'au moins un composant pris parmi un caoutchouc copolymère éthylène/propylène, les caoutchoucs copolymères éthylène/propylène/diéne non conjugué, et un caoutchouc copolymère éthylène/butadiène.

7. Composition conforme à l'une quelconque des revendications précédentes, dans laquelle le composant (b) de l'élastomère (B) est une résine oléfinique qui, chauffée et malaxée avec un peroxyde, se décompose et subit une réduction de sa masse moléculaire et une augmentation de sa fluidité.

8. Composition conforme à l'une quelconque des revendications précédentes, dans laquelle le composant (b) de l'élastomère (B) est constitué d'au moins un composant pris parmi un polypropylène isotactique, une résine copolymère propylène/éthylène, une résine copolymère propylène/1-butène, une résine copolymère propylène/1-hexène et une résine copolymère propylène/4-méthyl-1-pentène.

9. Composition conforme à l'une quelconque des revendications précédentes, dans laquelle le composant (c) de l'élastomère (B) est une substance caoutchouteuse de type hydrocarbure qui, chauffée et malaxée avec un peroxyde, ne subit pas de réticulation et ne perd donc pas de sa fluidité.

10. Composition conforme à l'une quelconque des revendications précédentes, dans laquelle le composant (c) de l'élastomère (B) est constitué d'au moins un composant pris parmi un polyisobutylène, un caoutchouc butyl, un caoutchouc copolymère d'au moins 70 % en moles de propylène et d'au plus 30 % en moles d'éthylène, et un caoutchouc copolymère propylène/1-butène.

11. Composition conforme à l'une quelconque des revendications précédentes, dans laquelle le composant (c) de l'élastomère (B) est une fraction pétrolière paraffinique, naphténique ou aromatique, à point d'ébullition élevé.

12. Feuille étanche à l'eau, fabriquée avec une composition conforme à l'une quelconque des revendications précédentes.